# EUROPÄISCHE PATENTSCHRIFT

(11) **EP 0 431 246 B1**
(45) Veröffentlichungstag und Bekanntmachung des Hinweises auf die Patenterteilung: **31.03.1993**
(21) Anmeldenummer: 90111054.4
(22) Anmeldetag: 12.06.1990
(51) Int. Cl.: G09F 9/35, G02F 1/133

(54) **Zwei parallel geschaltete, identische Lampen aufweisende Beleuchtungseinrichtung**
Illuminating device having two identical, parallely switched lamps
Dispositif d'éclairage avec deux lampes identiques connectées en parallèle

(30) Priorität: 07.12.1989 DE 3940506
(43) Veröffentlichungstag der Anmeldung: 12.06.1991
(73) Patentinhaber: VDO Luftfahrtgeräte Werk GmbH, D-60423 Frankfurt (DE)
(72) Erfinder: Wölfelschneider, Lothar, D-6234 Hattersheim 3 (DE)
(74) Vertreter: Gornott, Dietmar, Dipl.-Ing.

(56) Entgegenhaltungen:
- EP-A- 0 274 269
- WO-A-89/05037
- GB-A- 2 207 496
- INFORMATION DISPLAY Band 5, Nr. 11, November 1989, Seiten 8-13, New York, US; W.B. MERCER et al.: "Fluorescent backlights for LCDs"

## Beschreibung

Die Erfindung bezieht sich auf eine zwei parallel geschaltete, identische Lampen aufweisende Beleuchtungseinrichtung für eine rechteckige Fläche, insbesondere zum Durchleuchten einer Flüssigkristallzelle von der Rückseite her. Solche Beleuchtungseinrichtungen sind für Anzeigeinstrumente in Kraftfahrzeugen gebräuchlich und deshalb bekannt (vgl. z.B. GB-A-2207496).

Die aus Gründen der Redundanz vorgesehenen zwei Lampen sollen aus Kostengründen möglichst identisch sein. Bei Ausfall einer Lampe sollte die beleuchtete Fläche noch möglichst gleichmäßig ausgeleuchtet sein, damit das Anzeigeinstrument noch gut abgelesen werden kann. Um aus Gründen der Energieersparnis mit möglichst schwachen Lampen arbeiten zu können und um die Beleuchtungseinrichtung möglichst kompakt auszubilden, müssen diese relativ dicht zur auszuleuchtenden Fläche angeordnet werden. Das führt bei den bisher bekannten Beleuchtungseinrichtungen notwendigerweise dazu, daß bei Ausfall einer Lampe die Ausleuchtung der Fläche relativ ungleichmäßig ist.

Der Erfindung liegt die Aufgabe zugrunde, eine Beleuchtungseinrichtung der eingangs genannten Art so auszubilden, daß sich auch bei Ausfall einer Lampe eine möglichst gleichmäßige Ausleuchtung der zu beleuchtenden Fläche erzielen läßt, ohne daß hierzu die Vorrichtung unerwünscht sperrig ausgebildet und unerwünscht lichtstarke Lampen benutzt werden müssen.

Diese Aufgabe wird erfindungsgemäß dadurch gelöst, daß jede Lampe als mäanderförmig verlaufende Gasentladungsröhre mit zumindest einem schmalen u-förmigen Bereich und einem sich daran anschließenden, breiteren u-förmigen Bereich ausgebildet ist und beide Lampen mit ihren u-förmigen Bereichen derart ineinander verschachtelt angeordnet sind, daß jeweils der schmale, u-förmige Bereich der einen Lampe in den breiteren, u-förmigen Bereich der anderen Lampe eingreift.

Durch diese verschachtelte Anordnung der Lampen läßt sich auch bei Ausfall einer Lampe noch eine sehr gleichmäßige Ausleuchtung der zu beleuchtenden Fläche erzielen. Dadurch, daß jede Lampe einen schmalen und einen breiteren u-förmigen Bereich aufweist, können die Lampen trotz identischer Ausbildung in einer Ebene ineinander verschachtelt angeordnet werden, ohne daß sich Röhrenbereiche überkreuzen müssen.

Die Anschlüsse beider Lampen können bei der Beleuchtungseinrichtung bei den beiden Lampen an gegenüberliegenden Seiten der Rückseite der Beleuchtungseinrichtung vorgesehen werden, wenn gemäß einer vorteilhaften Ausgestaltung der Erfindung jede Lampe nacheinander den schmalen, u-förmigen Bereich, den breiteren, u-förmigen Bereich und daran anschließend wiederum einen schmaleren, u-förmigen Bereich aufweist, der weniger tief verläuft als der erste, schmale, u-förmige Bereich. Durch einen solchen Verlauf der Röhren läßt sich eine rechteckige Fläche besonders gleichmäßig ausleuchten.

Die Erfindung läßt zahlreiche Ausführungsformen zu. Zur weiteren Verdeutlichung ihres Grundprinzips ist eine davon schematisch in der Zeichnung dargestellt und wird nachfolgend beschrieben. Diese zeigt in
- Fig. 1: einen Schnitt durch eine Beleuchtungseinrichtung nach der Erfindung,
- Fig. 2: eine Ansicht der Rückseite der Beleuchtungseinrichtung nach Figur 1.

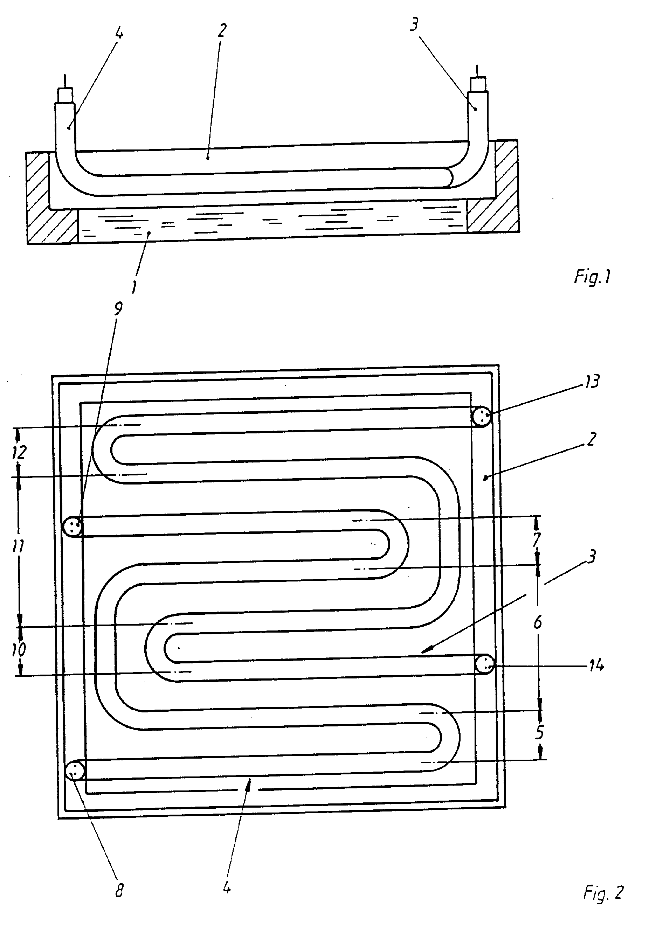

Die Figur 1 zeigt eine Flüssigkristallzelle 1, hinter der ein zur Rückseite hin offen dargestellter Lichtkasten 2 angeordnet ist. In diesem Lichtkasten 2 befinden sich zwei als Gasentladungsröhren ausgebildete Lampen 3, 4.

Die Gasentladungsröhren der Lampen 3, 4 verlaufen mäanderförmig, was die Figur 2 zeigt. Zu erkennen ist, daß die Lampe 4 zunächst einen schmalen, u-förmigen Bereich 5, daran anschließend einen breiteren, u-förmigen Bereich 6 und wiederum daran anschließend einen schmaleren, u-förmigen Bereich 7 aufweist. Das ermöglicht es, die Enden der Lampe 4 an einer gemeinsamen Seite des Lichtkastens 2 vorzusehen, so daß die Lampe 4 dort Anschlüsse 8, 9 aufweist.

Die Lampe 3 ist völlig gleich wie die Lampe 4 gestaltet. Sie greift mit einem schmalen, u-förmigen Bereich 10 in den breiteren, u-förmigen Bereich 6 der anderen Lampe 4 und mit einem breiteren, u-förmigen Bereich 11 über den schmalen, u-förmigen Bereich 7 der Lampe 4. Durch einen sich anschließenden, schmalen, u-förmigen Bereich 12 wird es wiederum möglich, daß auch die Lampe 3 ihre Anschlüsse 13, 14 nur an einer Seite des Lichtkastens 2 hat.

Um zu erreichen, daß die beiden Gasentladungsröhren stets gleichen Abstand voneinander haben, ist bei der Lampe 3 der schmale, u-förmige Bereich 10 weniger tief ausgeführt als ihr erster, schmaler, u-fömiger Bereich 12. Entsprechend ist der schmale, u-förmige Bereich 7 der Lampe 4 weniger tief ausgeführt als ihr erster, u-förmiger, schmaler Bereich 5.

Es versteht sich, daß sich das aus einem schmalen und einem breiteren u-förmigen Bereich bestehende Muster der Gasentladungsröhren beliebig oft wiederholen kann. Damit ist es möglich eine relativ große Anzeigefläche auszuleuchten.

Ein besonderer Vorteil der Beleuchtungseinrichtung ist es, daß ihre Bautiefe sehr gering gehalten werden kann.

## Patentansprüche

1. Zwei parallel geschaltete, identische Lampen aufweisende Beleuchtungseinrichtung für eine rechteckige Fläche, insbesondere zum Durchleuchten einer Flüssigkristallzelle von der Rückseite her, dadurch gekennzeichnet, daß jede Lampe (3, 4) als mäanderförmig verlaufende Gasentladungsröhre mit zumindest einem schmalen u-förmigen Bereich (7, 10) und einem sich daran anschließenden, breiteren u-förmigen Bereich (6, 11) ausgebildet ist und beide Lampen (3, 4) mit ihren u-förmigen Bereichen (7, 10; 6, 11) derart ineinander verschachtelt angeordnet sind, daß jeweils der schmale, u-förmige Bereich (7, 10) der einen Lampe (4 oder 3) in den breiteren, u-förmigen Bereich (6, 11) der anderen Lampe (4 oder 3) eingreift.

2. Beleuchtungseinrichtung nach Anspruch 1, dadurch gekennzeichnet, daß jede Lampe (3, 4) nacheinander den schmalen, u-förmigen Bereich (12, 5), den breiteren, u-förmigen Bereich (11, 6) und daran anschließend wiederum einen schmaleren, u-förmigen Bereich (10, 7) aufweist, der weniger tief verläuft als der erste, schmale, u-förmige Bereich (12, 5).

## Claims

1. An illumination device, having two identical lamps connected in parallel, for a rectangular surface, particularly for the transillumination of a liquid crystal cell from the rear side, characterised in that each lamp (3, 4) is constructed as a gas discharge tube with a meander-shaped course with at least one narrow U-shaped region (7, 10) and with a wider U-shaped region (6, 11) attached thereto, and both lamps (3, 4) are arranged with their U-shaped regions (7, 10; 6, 11) interleaved in such a way that each narrow U-shaped region (7, 10) of one lamp (4 or 3) engages in the wider U-shaped region (6, 11) of the other lamp (4 or 3).

2. An illumination device according to Claim 1, characterised in that each lamp (3, 4) successively comprises the narrow U-shaped region (12, 5), the wider U-shaped region (11, 6) and a narrower U-shaped region (10, 7) which is attached in turn to the latter and which extends less far than the first narrow U-shaped region (12, 5).

## Revendications

1. Dispositif d'éclairage comportant deux lampes identiques montées en parallèle, destiné à éclairer une surface rectangulaire et notamment à éclairer par derrière une cellule à cristaux liquides, dispositif caractérisé en ce que chaque lampe (3, 4) est un tube fluorescent sinueux, présentant au moins une partie en U (7, 10) étroite suivie d'une partie en U (6, 11) plus large, et en ce que ces parties en U (7, 10 ; 6, 11) des deux lampes (3, 4) sont imbriquées les unes dans les autres de façon que chaque partie étroite (7, 10) en U de l'une de ces lampes (4 ou 3) passe dans la partie en U plus large(6, 11) de l'autre lampe (3 ou 4).

2. Dispositif d'éclairage selon la revendication 1, caractérisé en ce que chaque lampe (3, 4) présente successivement la partie en U (12, 5) étroite, la partie en U (11, 6) plus large et de nouveau une partie en U (10, 7) étroite, qui y fait suite et qui est moins longue que la première partie (12, 5) étroite.
